# EUROPEAN PATENT APPLICATION

(11) **EP 1 919 049 A2**
(43) Date of publication of application: **07.05.2008**
(21) Application number: 07020586.9
(22) Date of filing: 22.10.2007
(51) Int. Cl.: H02G 1/08

(54) **Device for facilitating insertion and/or extraction of wires in/from ducts, particularly for electrical wires in corrugated conduits or the like**

(30) Priority: 31.10.2006 IT MI20062101
(71) Applicant: SINERT S.R.L., 55100 Lucca (IT)
(72) Inventor: Carriero, Quintino, 20025 Legnano (Prov. of Milano) (IT)
(74) Representative: Alagem Modiano, Lara S.

(57) **Abstract**

A device (1a) for facilitating insertion of wires in ducts and/or for facilitating extraction of wires from ducts, particularly for electrical wires in corrugated conduits or the like, comprising an inlet element (2a) which has a passage through which at least one wire (20) to be inserted in the duct can pass; the inlet element (2a) is associable with one end of a duct in order to connect the passage to the inside of the duct (30), and the passage defines a sliding surface, as a replacement of the duct end, for the wire (20) during its insertion in the duct (30) or during its extraction.

## Description

The present invention relates to a device for facilitating the insertion of wires in ducts and/or for facilitating the extraction of wires from ducts, particularly for electrical wires in corrugated conduits or the like.

As is known, installation of electrical systems uses ducts, such as for example rigid cylindrical ducts or flexible corrugated conduits or the like, in which the electrical wires of the system are inserted. Such ducts are designed to protect the electrical wires from masonry and/or from atmospheric agents and/or from any event which might damage such electrical wires.

Insertion of the electrical wires within these ducts, commonly known as pulling, is quite often difficult and can affect even considerably the overall installation times of the electrical system.

One of the obstacles that increase the difficulty of inserting a wire in a duct is constituted by the conditions of the end of the duct through which the wire has to pass during insertion. Ducts of this kind, particularly in the case of corrugated conduits, are cut during their installation by means of scissor-like tools which crimp the duct in addition to cutting it. Due to this fact, the ends of the ducts are often pinched and have cutting irregularities which hinder the subsequent insertion of the wires.

Moreover, the ends of the ducts might be difficult to access once installed, forcing bends of the wires which cause the wires to scrape against the end of the duct during insertion. Contact between the wire and the end of the duct during insertion can cause deformation of the end of the duct, particularly in the case of flexible conduits, toward the axis of the duct, reducing the inlet cross-section of the duct.

Extraction of the electrical wires from ducts also can be difficult, and the scraping of the wire against the end of the duct, for example if, due to space occupation requirements, it is necessary to bend the wire indeed at such end of the duct, can cause damage to the wire.

The aim of the present invention is to solve the problems described above by providing a device which facilitates insertion of wires within ducts and/or extraction of wires from ducts, particularly for electrical wires in corrugated conduits or the like, so as to reduce significantly the time required by the insertion operation and/or so as to protect the wire during extraction.

Within this aim, an object of the invention is to provide a device which is extremely simple to use.

Another object of the invention is to provide a device which can have a low cost and can be used for many operations for inserting wires within ducts.

This aim and these and other objects, which will become better apparent hereinafter, are achieved by a device for facilitating insertion of wires in ducts and/or for facilitating extraction of wires from ducts, particularly for electrical wires in corrugated conduits or the like, characterized in that it comprises an inlet element which has a passage through which at least one wire can pass, said inlet element being associable with one end of the duct in order to connect said passage to the inside of the duct and said passage defining a sliding surface, as a replacement of said duct end, for the wire during its insertion in the duct or during its extraction from the duct.

Further characteristics and advantages of the invention will become better apparent from the description of four preferred but not exclusive embodiments of the device according to the invention, illustrated by way of non-limiting example in the accompanying drawings, wherein:

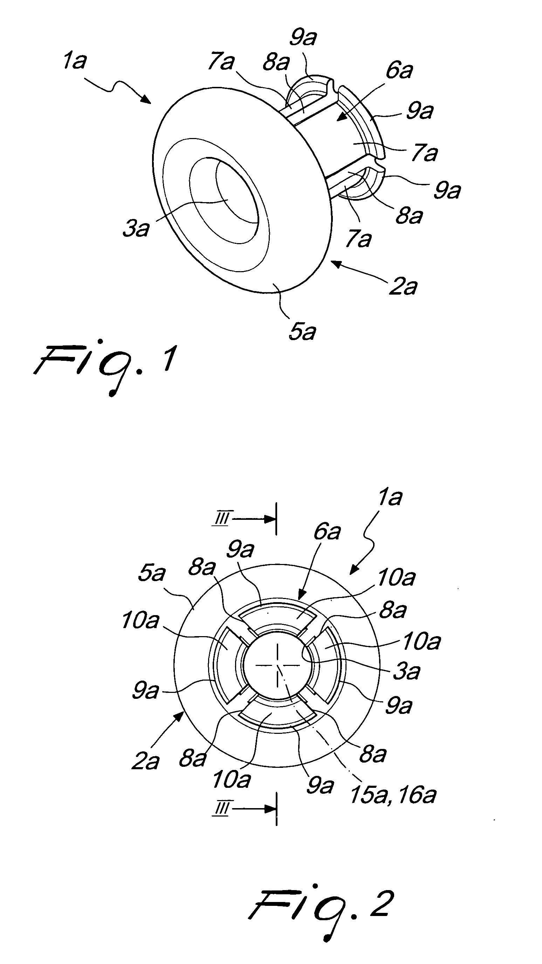

Figure 1 is a perspective view of the device according to the invention in its first embodiment;

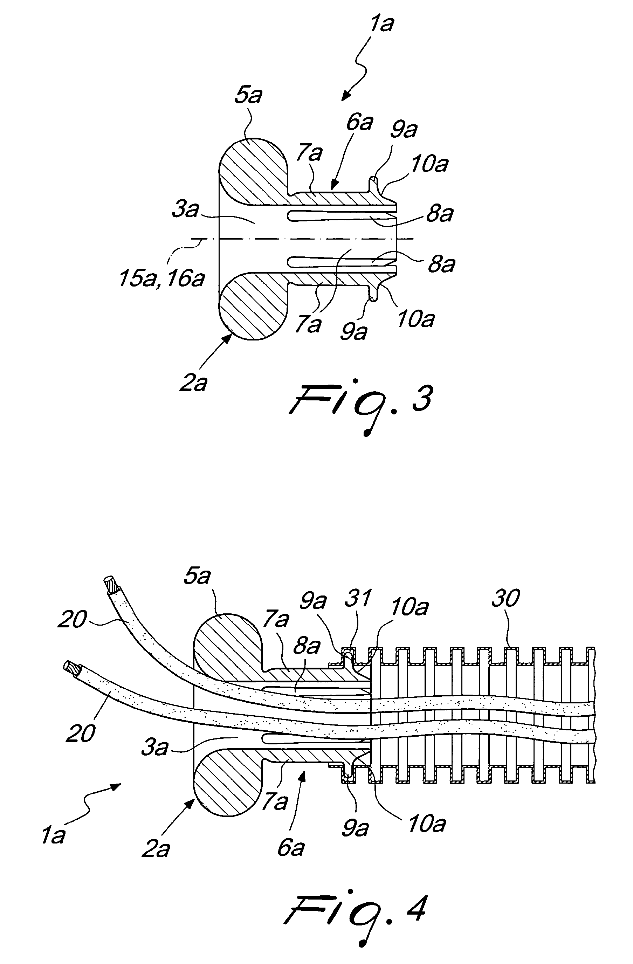

Figure 2 is a view of the device according to the invention in its first embodiment, taken from its side designed to be associated with the duct;
Figure 3 is a sectional view of Figure 2, taken along the line III-III;

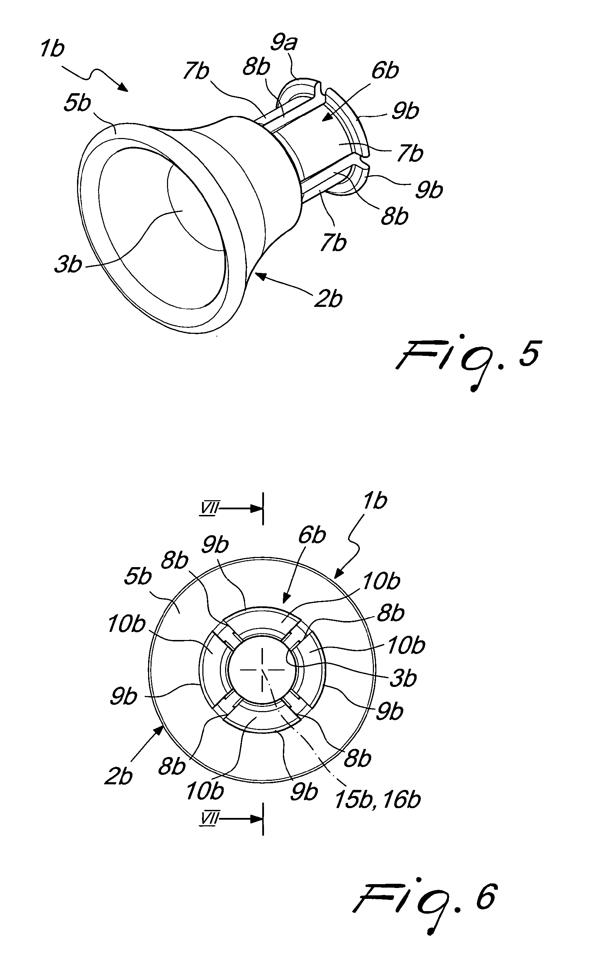

Figure 4 is a sectional view, similar to Figure 3, of the device according to the invention in its first embodiment associated with the end of a duct, showing two wires during their insertion in the duct;
Figure 5 is a perspective view of the device according to the invention in a second embodiment;
Figure 6 is a view of the device according to the invention in its second embodiment, taken from its side designed to be associated with the duct;

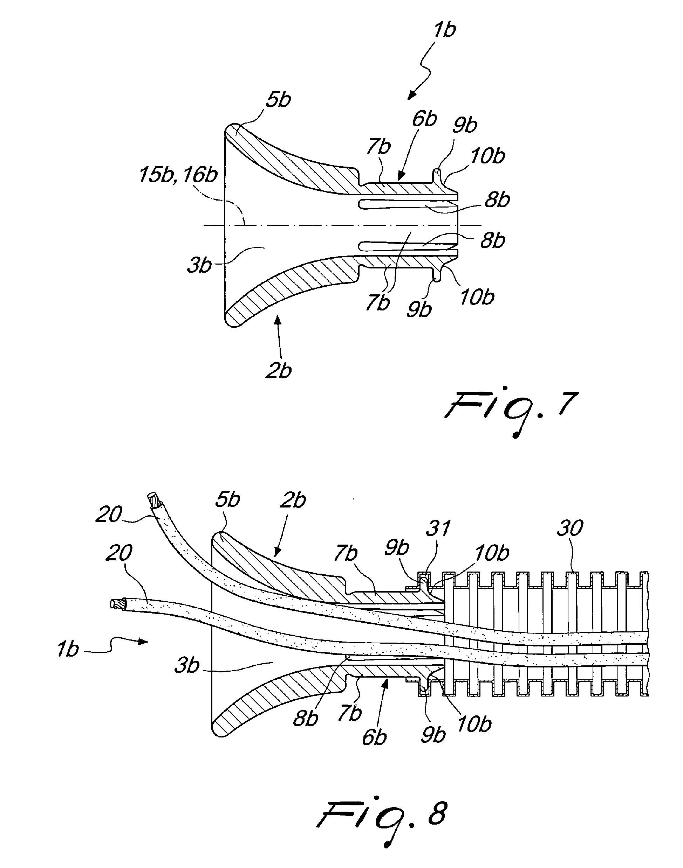

Figure 7 is a sectional view of Figure 6, taken along the line VII-VII;
Figure 8 is a sectional view, similar to Figure 7, of the device according to the invention in its second embodiment, associated with the end of a duct, showing two wires during their insertion in the duct;

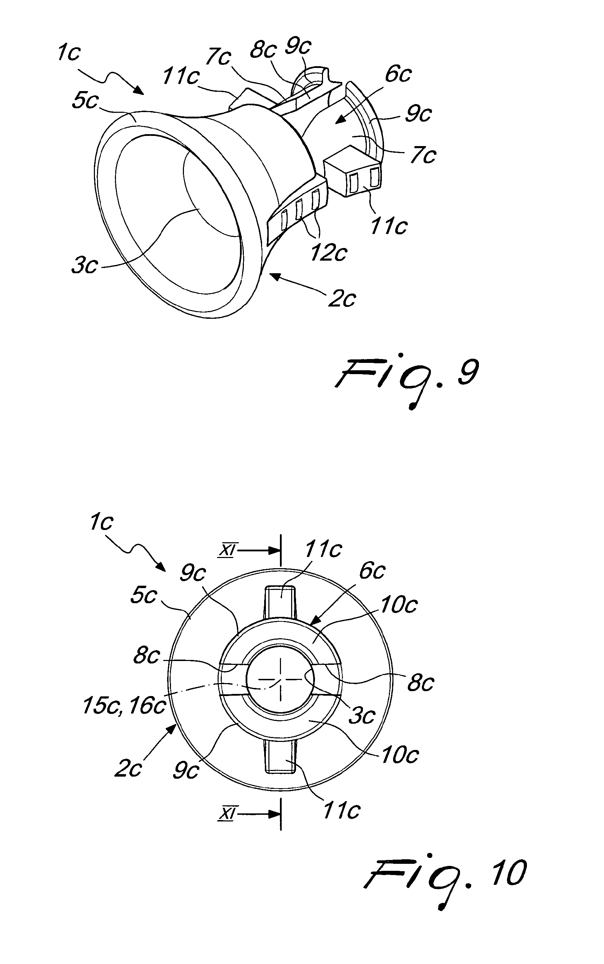

Figure 9 is a perspective view of the device according to the invention in a third embodiment;

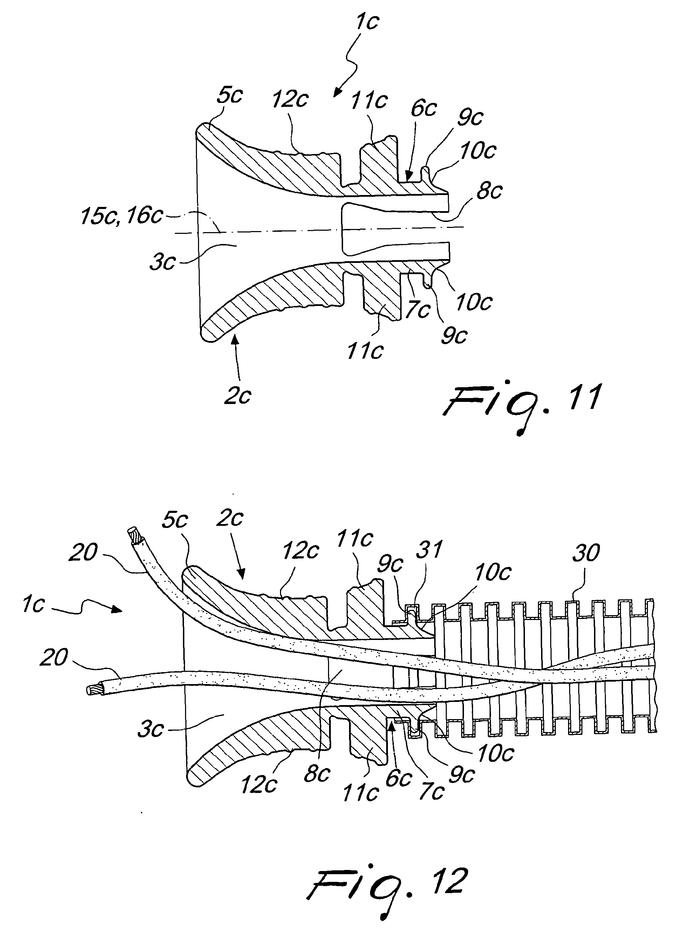

Figure 10 is a view of the device according to the invention in its third embodiment, taken from its side designed to be associated with the duct;
Figure 11 is a sectional view of Figure 10, taken along the line XI-XI;
Figure 12 is a sectional view, similar to Figure 11, of the device according to the invention in its third embodiment, associated with the end of a duct, showing two wires during their insertion in the duct;

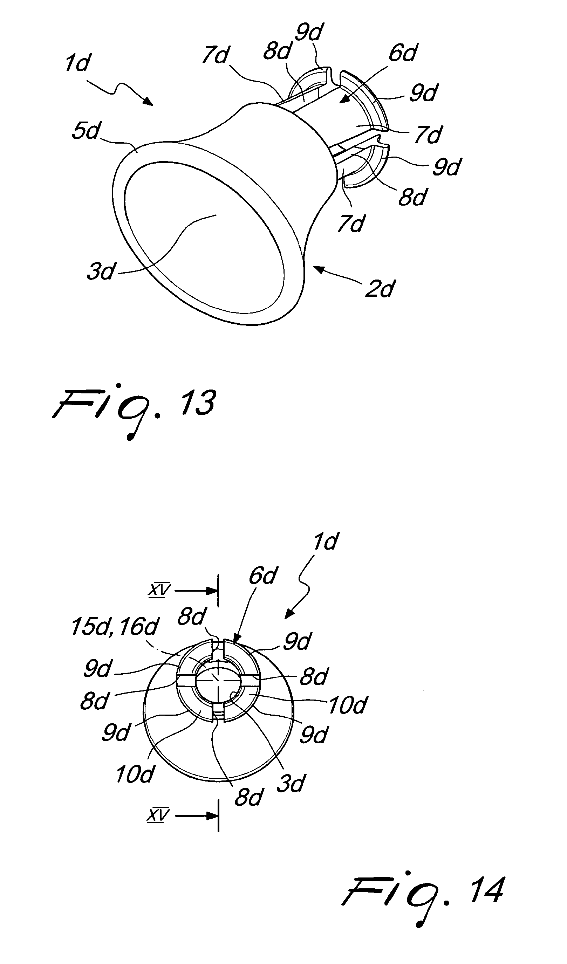

Figure 13 is a perspective view of the device according to the invention in a fourth embodiment;
Figure 14 is a view of the device according to the invention in its fourth embodiment, taken from its side designed to be associated with the duct;

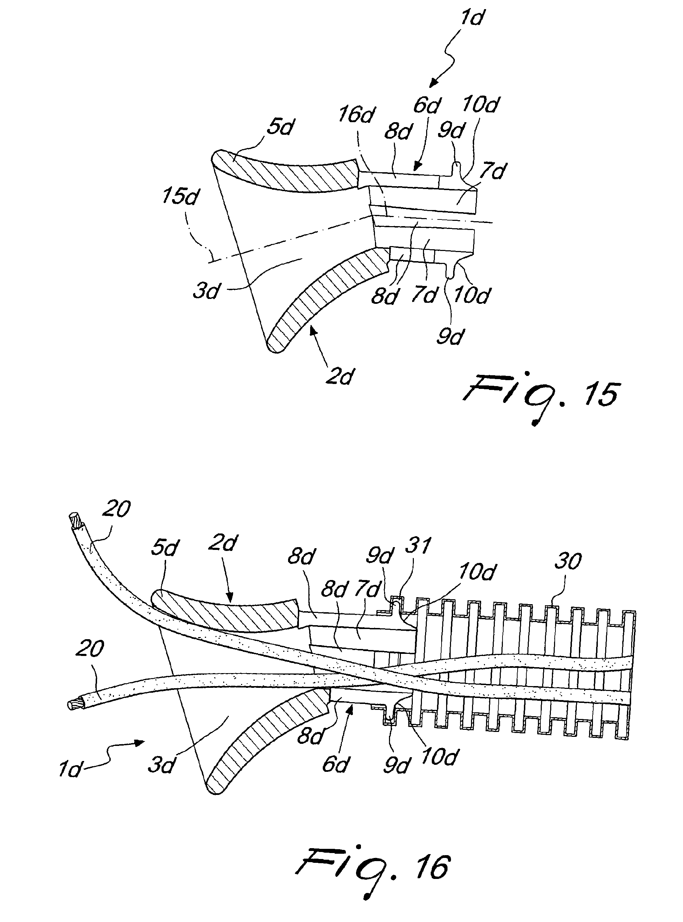

Figure 15 is a sectional view of Figure 14, taken along the line XV-XV;
Figure 16 is a sectional view, similar to Figure 15, of the device according to the invention in its fourth embodiment, associated with the end of a duct, showing two wires during their insertion in the duct.

With reference to the figures, the device according to the invention, generally designated in its different embodiments by the reference numerals 1a, 1b, 1c, 1d, comprises an inlet element 2a, 2b, 2c, 2d, which has a passage 3a, 3b, 3c, 3d which can be crossed by at least a wire 20 to be inserted in a duct 30, which is constituted for example by a corrugated conduit or the like. The inlet element 2a, 2b, 2c, 2d can be associated with an end of the duct 30 in order to connect the passage 3a, 3b, 3c, 3d to the inside of the duct 30 and the passage 3a, 3b, 3c, 3d defines a sliding surface, as a replacement of the end of the duct 30, for the wire 20 during its insertion in the duct 30.

The surface of the passage 3a, 3b, 3c, 3d is preferably smooth so as to have, with respect to the wire 20, a friction coefficient which is lower than that of the end of the duct 30.

The passage 3a, 3b, 3c, 3d lies longitudinally within the inlet element 2a, 2b, 2c, 2d, which is composed of a contact portion 5a, 5b, 5c, 5d and a mating portion 6a, 6b, 6c, 6d, which are arranged in succession along the passage 3a, 3b, 3c, 3d. The mating portion 6a, 6b, 6c, 6d is preferably provided with means for engaging the end of the duct 30.

In the first embodiment, the contact portion 5a is constituted by a rim which has a rounded profile, is preferably substantially toroidal, lies around the axis 15a of the contact portion 5a and is arranged at the axial end of the inlet element 2a which lies opposite the end to be associated with the end of the duct 30.

In the other three embodiments, the contact portion 5b, 5c, 5d is shaped like a funnel which tapers gradually toward the mating portion 6b, 6c, 6d.

In these embodiments, the internal surface of the contact portion 5b, 5c, 5d which constitutes a part of the sliding surface cited above is constituted by a hyperbolic surface, which is generated ideally by the rotation of a hyperbola about the axis 15b, 15c, 15d of the contact portion 5b, 5c, 5d and tapers toward the mating portion 6b, 6c, 6d.

This particular shape of the internal surface of the contact portion 5b, 5c, 5d allows to reduce the contact surface between the wire 20 and the contact portion 5b, 5c, 5d during the insertion of the wire 20 in the passage 3b, 3c, 3d.

As an alternative, the surface of the contact portion 5b, 5c, 5d can be constituted by a conical surface whose axis coincides with the axis 15b, 15c, 15d and tapers toward the mating portion 6b, 6c, 6d.

In the first three exemplary embodiments, the mating portion 6a, 6b, 6c is substantially cylindrical, with an axis 16a, 16b, 16c which coincides with the axis 15a, 15b, 15c of the contact portion 5a, 5b, 5c, whereas in the fourth embodiment the mating portion 6d is again substantially cylindrical, but its axis 16d is inclined with respect to the axis 15d of the corresponding contact portion 5d.

Preferably, the mating portion 6a, 6b, 6c, 6d can be inserted, by means of its end which lies opposite the contact portion 5a, 5b, 5c, 5d, in the end of the duct 30.

The means for engaging the mating portion 6a, 6b, 6c, 6d with the end of the duct 30 are constituted preferably by wings 7a, 7b, 7c, 7d of the mating portion 6a, 6b, 6c, 6d, which are arranged around the axis 16a, 16b, 16c, 16d of the mating portion 6a, 6b, 6c, 6d and can flex toward the axis 16a, 16b, 16c, 16d so as to allow their insertion in the duct 30 and their engagement, by elastic reaction, with the internal surface of the duct 30.

The wings 7a, 7b, 7c, 7d are defined by axial slots 8a, 8b, 8c, 8d of the mating portion 6a, 6b, 6c, 6d which lie along at least one part of said mating portion 6a, 6b, 6c, 6d starting from its opposite axial end with respect to the contact portion 5a, 5b, 5c, 5d or from the end of the mating portion 6a, 6b, 6c, 6d which can be inserted in the end of the duct 30.

In the first, second and fourth embodiments, the axial slots 8a, 8b, 8d lie along two planes which pass through the axis 16a, 16b, 16d and are mutually perpendicular, dividing the mating portion 6a, 6b, 6d into four wings 7a, 7b, 7d, while in the third embodiment the axial slots 8c lie along a same plane which passes through the axis 16c, dividing the mating portion 6c into two wings 7c which are arranged on mutually opposite sides with respect to said plane.

Conveniently, the wings 7a, 7b, 7c, 7d have, on their outer surface, proximate to their free end, i.e., the end that can be inserted within the duct 30, at least a tooth 9a, 9b, 9c, 9d, which can engage a circumferential groove 31 of the internal surface of the duct 30 if said duct is constituted by a corrugated conduit or the like provided with an internal surface with a plurality of mutually spaced circumferential grooves.

Preferably, the wings 7a, 7b, 7c, 7d have, in the region of their outer surface comprised between the tooth 9a, 9b, 9c, 9d and their free end which lies opposite the contact portion 5a, 5b, 5c, 5d, i.e., their end that can be inserted within the duct 30, a guiding portion 10a, 10b, 10c, 10d, which is shaped like a portion of a conical surface whose axis coincides with the axis 16a, 16b, 16c, 16d and tapers toward the free end of the wings 7a, 7b, 7c, 7d.

This guiding portion 10a, 10b, 10c, 10d is preferably radiused with the tooth 9a, 9b, 9c, 9d of the corresponding wing 7a, 7b, 7c, 7d so as to facilitate insertion of the mating portion 6a, 6b, 6c, 6d within the duct 30 and cause, during insertion, flexing of the wings 7a, 7b, 7c, 7d toward the axis 16a, 16b, 16c, 16d and subsequent engagement, by elastic reaction of the wings 7a, 7b, 7c, 7d, of the teeth 9a, 9b, 9c, 9d with the duct 30.

The wings 7a, 7b, 7c, 7d have a portion which is designed to remain outside the duct 30 when the inlet element 2a, 2b, 2c, 2d is connected to the end of said duct 30. Such portion defines a pressure region which can be used to produce manually the elastic flexing of the wings 7a, 7b, 7c, 7d toward the axis 16a, 16b, 16c, 16d in order to cause the disengagement of the teeth 9a, 9b, 9c, 9d from the circumferential groove 31 of the duct 30 when the inlet element 2a, 2b, 2c, 2d is to be removed from the duct 30.

In the third embodiment, such pressure region is constituted by a region 11c which is in relief on the outer surface of the wings 7c and is shaped like a button, so as to make this operation particularly easy.

In the third embodiment, the two button-shaped regions 11c in relief, by being arranged on two mutually opposite wings 7c, are also mutually aligned along a direction which is perpendicular to the axis 16c.

Also in this embodiment, the outer surface of the contact portion 5c also has regions 12c in relief, which are aligned with the regions 11c and define resting regions for the fingers of the user when the user acts on the regions 11c.

It should be noted that the guiding portion 10a, 10b, 10c, 10d may also be omitted. In this case, insertion of the mating portion 6a, 6b, 6c, 6d within the duct 30 can be performed in any case easily, by acting manually on the wings 7a, 7b, 7c, 7d so as to flex them elastically toward the axis 16a, 16b, 16c, 16d so as to allow the teeth 9a, 9b, 9c, 9d to pass within the duct 30.

The inlet element 2a, 2b, 2c, 2d is preferably provided monolithically and even more preferably made of molded synthetic material.

In the exemplary embodiments described above, individual characteristics, given in relation to specific examples, may actually be interchanged with other different characteristics that exist in other exemplary embodiments.

The use of the device according to the invention is evident from what has been described and shown, and in particular it is evident that by using the elasticity of the wings 7a, 7b, 7c, 7d the device can be engaged and disengaged with respect to the end of the duct 30 within which the wires 20 are to be inserted. By means of the device associated with the end of the duct 30, the wires 20 can be inserted easily within the duct 30, since the end of the duct 30, as a consequence of the engagement with the device according to the invention, is kept open and the surface of the passage 3a, 3b, 3c, 3d facilitates sliding of the wire 20 during its insertion within the duct 30.

Likewise, the device according to the invention can also be used to facilitate extraction of a wire 20 from a duct 30. In this case, the device avoids direct rubbing of the wire against the end of the duct 30, effectively avoiding damage to the wire 20.

In practice it has been found that the device according to the invention fully achieves the intended aim, since by defining a sliding surface for the wire as a replacement of the end of the duct, it provides particularly simple and easy insertion of wires within ducts and protects wires during their extraction from the ducts.

The device thus conceived is susceptible of numerous modifications and variations, all of which are within the scope of the appended claims; all the details may further be replaced with other technically equivalent elements.

In practice, the materials used, as well as the dimensions, may be any according to requirements and to the state of the art.

The disclosures in Italian Patent Application No. MI2006A002101 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for facilitating insertion of wires in ducts and/or for facilitating extraction of wires from ducts, particularly for electrical wires in corrugated conduits or the like, **characterized in that** it comprises an inlet element which has a passage through which at least one wire can pass, said inlet element being associable with one end of the duct in order to connect said passage to the inside of the duct and said passage defining a sliding surface, as a replacement of said duct end, for the wire during its insertion in the duct or during its extraction from the duct.

2. The device according to claim 1, **characterized in that** said sliding surface has, with respect to the wire, a friction coefficient which is lower than that of the end of the duct.

3. The device according to claim 1, **characterized in that** said passage lies longitudinally within said inlet element, said inlet element having a contact portion and a mating portion which are arranged in succession along said passage, said mating portion being provided with means for engaging said end of the duct.

4. The device according to one or more of the preceding claims, **characterized in that** said contact portion is constituted by a rim which has a rounded profile and is arranged at the end of said inlet element which lies opposite the end which can be associated with said end of the duct.

5. The device according to one or more of the preceding claims, **characterized in that** said rim having a round profile is substantially toroidal and lies around the axis of said contact portion.

6. The device according to one or more of the preceding claims, **characterized in that** said contact portion is shaped like a funnel which gradually tapers toward said mating portion.

7. The device according to one or more of the preceding claims, **characterized in that** the internal surface of said contact portion is constituted by a conical surface which tapers toward said mating portion.

8. The device according to one or more of the preceding claims, **characterized in that** the internal surface of said contact portion is constituted by a hyperbolic surface which is generated by the rotation of a hyperbola about the axis of said contact portion and tapers toward said mating portion.

9. The device according to one or more of the preceding claims, **characterized in that** said mating portion is substantially cylindrical.

10. The device according to one or more of the preceding claims, **characterized in that** said contact portion and said mating portion are mutually coaxial.

11. The device according to one or more of the preceding claims, **characterized in that** the axis of said contact portion is inclined with respect to the axis of said mating portion.

12. The device according to one or more of the preceding claims, **characterized in that** said mating portion can be inserted, with its opposite end with respect to said contact portion, in said end of the duct.

13. The device according to one or more of the preceding claims, **characterized in that** said engagement means comprise wings of said mating portion which are arranged around the axis of said mating portion and can flex elastically toward the axis of said mating portion for their insertion in the duct and can engage, by elastic reaction, the internal surface of the duct.

14. The device according to one or more of the preceding claims, **characterized in that** said wings are defined by axial slots of said mating portion which lie, along at least one axial part of the mating portion, starting from its opposite axial end with respect to said contact portion.

15. The device according to one or more of the preceding claims, **characterized in that** said wings have, on their outer surface, proximate to their free end, at least one tooth which can engage a circumferential groove of the internal surface of the duct.

16. The device according to one or more of the preceding claims, **characterized in that** said wings have, in the region of their outer surface which is comprised between said tooth and their free end, which lies opposite said contact portion, a guiding portion which is shaped like a portion of a conical surface whose axis coincides with the axis of said mating portion and tapers toward the free end of said wings.

17. The device according to one or more of the preceding claims, **characterized in that** said guiding portion is radiused with said tooth.

18. The device according to one or more of the preceding claims, **characterized in that** said wings have a part which is designed to remain outside the duct with the inlet element connected to said end of the duct; said part of the wings defining a pressing region which can be used to cause to elastic flexing of said wings toward the axis of said mating portion.

19. The device according to one or more of the preceding claims, **characterized in that** said pressing region is shaped like a button in relief on the outer surface of said wings.

20. The device according to one or more of the preceding claims, **characterized in that** said mating portion has two of said wings which are arranged on mutually opposite sides with respect to an imaginary plane which passes through the axis of said mating portion and are provided, on their outer surface, with a corresponding button-shaped pressing region, the pressing regions of said two wings being mutually aligned along a direction which is perpendicular to the axis of said mating portion.

21. The device according to one or more of the preceding claims, **characterized in that** said inlet element is provided monolithically.
